(19) Europäisches Patentamt

**European Patent Office**

Office européen des brevets

(11) Veröffentlichungsnummer : **0 106 142**
**B1**

(12) **EUROPÄISCHE PATENTSCHRIFT**

(45) Veröffentlichungstag der Patentschrift :
27.05.87

(51) Int. Cl.⁴ : **B 60 R 25/00**, B 60 B   7/00

(21) Anmeldenummer : **83108939.6**

(22) Anmeldetag : **09.09.83**

(54) **Radfelge für Fahrzeuge mit Sicherung gegen unbefugtes Lösen der Haltemuttern.**

(30) Priorität : **13.09.82 DE 3233889**

(43) Veröffentlichungstag der Anmeldung :
**25.04.84 Patentblatt 84/17**

(45) Bekanntmachung des Hinweises auf die Patenterteilung : **27.05.87 Patentblatt 87/22**

(84) Benannte Vertragsstaaten :
**AT BE CH DE FR GB IT LI LU NL SE**

(56) Entgegenhaltungen :
**DE-A- 2 828 104**
**GB-A- 1 245 832**
**US-A- 2 073 851**
**US-A- 2 493 366**
**US-A- 2 535 126**

(73) Patentinhaber : **Stahlschmidt & Maiworm GmbH & Co.KG**
**In der Lacke**
**D-5980 Werdohl 1 (DE)**

(72) Erfinder : **Pforr, Hans-Joachim**
**Jahnstrasse 18**
**D-5989 Neuenrade (DE)**

(74) Vertreter : **Seibert, Rudolf, Dipl.-Ing.**
**Tattenbachstrasse 9**
**D-8000 München 22 (DE)**

**Beschreibung**

Die vorliegende Erfindung bezieht sich auf eine Radfelge für Kraftfahrzeuge gemäß dem Oberbegriff des Patentanspruches 1.

Die Gefahr des Diebstahles von Radfelgen, sei es um in den Besitz der Felge selbst zu kommen, was insbesondere bei relativ teuren sportlichen Leichtmetallfelgen der Fall ist, sei es, um in den Besitz des Reifens selbst zu gelangen, nimmt ständig zu.

Insbesondere bei Leichtmetallfelgen, bei denen im allgemeinen die Radbefestigung mittels der Radschrauben in einem mittleren zurückgezogenen Bereich erfolgt, ohne daß irgendwelche Zierkappen oder dgl. aufgebracht werden, häufen sich die Klagen über gestohlene Kfz-Räder.

Es sind schon verschiedene Vorschläge bekannt geworden, wie das Lösen der Radmuttern durch Unbefugte verhindert werden kann.

Eine an sich bekannte Lösung besteht in der Verwendung von in sich, beispielsweise über einen Spezialschlüssel gesicherten Radmuttern. Diese Radmuttern sind unverhältnismäßig aufwendig und haben auch den Nachteil, daß ein Radwechsel durch den Besitzer selbst entweder Spezialwerkzeuge oder Spezialschlüssel benötigt, was insbesondere unterwegs nachteilig ist.

Es sind gemäß dem Oberbegriff des Anspruchs 1, auch schon Spezialfelgen bekannt geworden, z. B. US-A-2 493 366, GB-A-1 245 832 und US-A-2 535 126, bei denen eine Diebstahlsicherung dadurch erreicht wird, daß an einen über die Radnabe reichenden auf die Halteschrauben zusammen auf die Felge aufgeschraubten Gestell eine über die Radmuttern reichende Abdeckplatte verschließbar aufgesetzt wird.

Eine derartige Konstruktion ist relativ platzaufwendig und bei vielen Radtypen insbesondere mit großer Einpresstiefe gar nicht realisierbar, weil die Bauhöhe notwendigerweise so groß wird, daß das Schloß über die Felge und ggf. sogar die Fahrzeugbegrenzung hinausreicht und damit nicht nur ästhetisch unschön ist sondern sogar eine Verletzungsgefahr im Straßenverkehr wesentlich erhöht.

Aufgabe der Erfindung ist es, eine Sicherung an Radfelgen gegen unbefugtes Lösen der Haltemuttern anzugeben, die insbesondere in Verbindung mit Leichtmetallfelgen einfach aufzubauen und zu montieren ist, einen hohen Grad an Sicherheit garantiert und die im Aufbau relativ leicht einer Vielzahl von Felgenformen mit unterschiedlichstem Felgendesign anpaßbar ist.

Diese Aufgabe wird mit einer Radfelge mit den Merkmalen des Patentanspruches 1 gelöst.

Bei der Radfelge nach der Erfindung wird also das Halteteil der Verriegelung für eine Abdeckplatte zentrisch in der Nabenbohrung der Felge verspannt, indem beispielsweise gemäß einer vorteilhaften Weiterbildung des Erfindungsgedankens eine einfache mit Haltefedern, die die Nabenöffnungsränder von innen umgreifen, ausgerüstete Halteplatte von rückwärts in die Felge eingeschoben wird, so daß das Eingriffsteil der Verriegelung von vorne durch diese Platte hindurchgreifen kann und die mit dem Eingriffsteil starr verbundene Halteplatte in eine unlösbare Verbindung mit der Felge selbst zu bringen gestattet.

Auf diese Weise wird einerseits eine einwandfreie symmetrische Halterung der Abdeckplatte für die Radmuttern erreicht, und zwar ohne daß eine die Bauhöhe des Rades vergrößernde Konstruktion notwendig wäre.

Einzelheiten einer Radfelge mit den Merkmalen nach der Erfindung werden im folgenden in Verbindung mit den anliegenden Zeichnungen erläutert.

In diesen Zeichnungen zeigen :

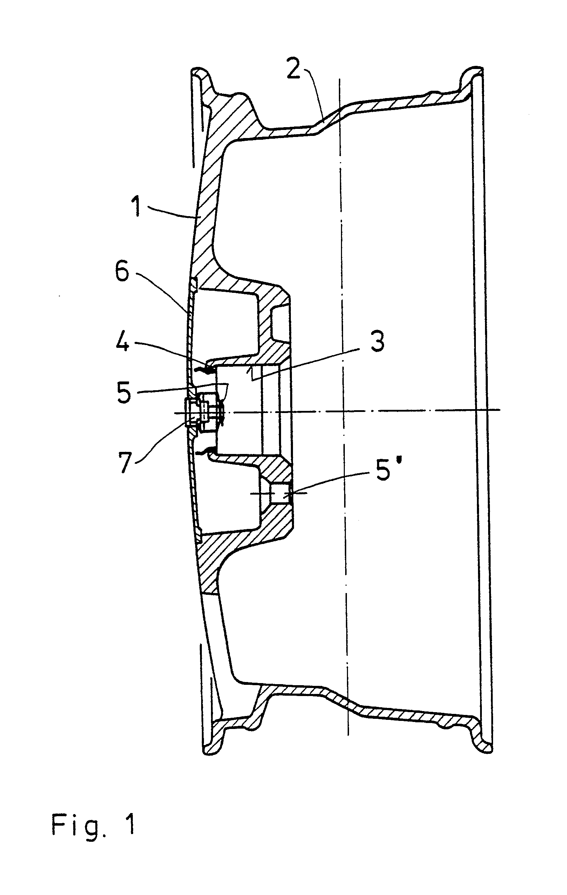

Figur 1 eine Schnittdarstellung durch eine Felge mit einer Verriegelung einer Abdeckplatte mit den Merkmalen nach der Erfindung, wobei die Verriegelung selbst aus Übersichtlichkeitsgründen nur in ihrem wesentlichen Aufbau wiedergegeben ist,

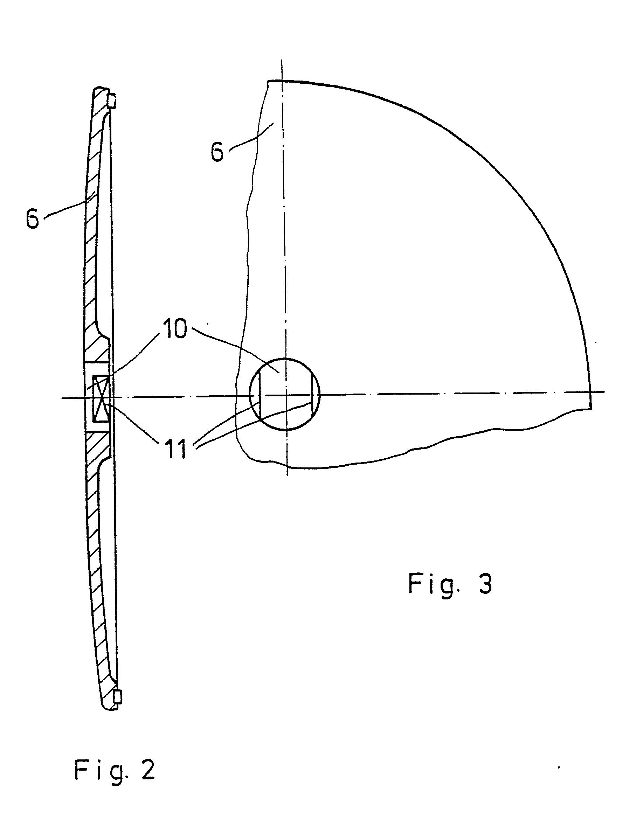

.Figur 2 in einer Schnittdarstellung eine Ausführungsmöglichkeit der Halteplatte,

Figur 3 in einem Ausschnitt die Draufsicht auf die in Fig. 2 wiedergegebene Ausführungsform,

Figur 4 eine Ausführungsform des in die Radnabe zu verspannenden Halteteiles,

Figur 5 eine Schnittdarstellung des Halteteils längs der in Fig. 4 eingezeichneter Linien V-V,

Figur 6 die Seitenansicht eines Sperrschlosses, wie es mit Vorteil in die Abdeckplatte einzusetzen ist und

Figuren 7 und 8 in zwei Ansichten den am Drehteil des Schlosses nach Fig. 6 zu befestigenden Drehriegel, der entsprechend mit dem Halteteil zusammenwirkt.

In Fig. 1 ist zur Übersicht über Aufbau und Wirkungsweise einer Sicherung für eine Radfelge nach der Erfindung einer Radfelge in ihrer Gesamtheit im Schnitt dargestellt, wie sie beispielsweise als Leichtmetallrad ausgeführt sein könnte. Die Felge selbst besteht aus Radschüssel 1 und Felgenring 2. Die Radschüssel weist in der Mitte eine Nabenöffnung 3 auf, mit der es auf die Welle eines Fahrzeuges aufgeschoben wird. Die Nabenöffnung 3 ist an seiner Vorderseite mit einem Innenrand 4 versehen, der im allgemeinen dazu dient, eine Radkappe oder dgl. sicher zu halten.

Das Rad selbst wird über die Bohrungen 5', durch welche — nicht dargestellte — Radschrauben hindurchtreten, mittels — ebenfalls nicht dargestellter — Muttern befestigt.

Um ein Entfernen der Radmuttern durch unbefugte Personen zu verhindern und damit einem Diebstahl des Rades vorzubeugen ist eine Sicherung vorgesehen. Diese besteht erfindungsgemäß aus einem Halteteil 5, das von rückwärts in die Nabenbohrung 3 eingesetzt wird, sowie aus einer Abdeckplatte 6 mit einem in der Mitte der Abdeckplatte angeordneten Eingriffsteil 7. Die Abdeckplatte 6 ist dabei so ausgebildet, daß sie den Ringraum bzw. die Ausnehmungen zur Aufnahme der Radmuttern in der Radschüssel vollständig überdeckt.

Die Fig. 2 zeigt in einer Schnittdarstellung eine Ausführungsmöglichkeit dieser Abdeckplatte 6 und die Fig. 3 in einem Ausschnitt eine Draufsicht auf die Platte selbst.

Wie aus den beiden Figuren 2 und 3 zu ersehen, ist die Abdeckplatte leicht nach außen gewölbt und liegt mit ihrem Rand auf einem abgesetzten Teil der Radschüssel 1 auf.

Dabei empfiehlt es sich, um mit Sicherheit Unebenheiten auszugleichen, eine Eindringen von Schmutz in dem Bereich der Radmuttern zu verhindern sowie mit Sicherheit auch bei größten Beanspruchungen eine Geräuscherzeugung zu vermeiden, längs der Auflagefläche einen Dichtungsring, beispielsweise auch in Form eines O-Ringes mit flächiger oder auch O-förmigen Querschnitt vorgesehen. In der Mitte, nämlich dem Bereich, der auf die Nabenöffnung zu liegen kommt, ist eine Ausnehmung 10 vorgesehen, in die, wie noch im einzelnen erläutert wird, ein Zylinderschloß eingesetzt ist und dort unverdrehbar gehalten wird. Die an sich kreisförmige Öffnung ist hierzu mit zwei Stegen 11 versehen.

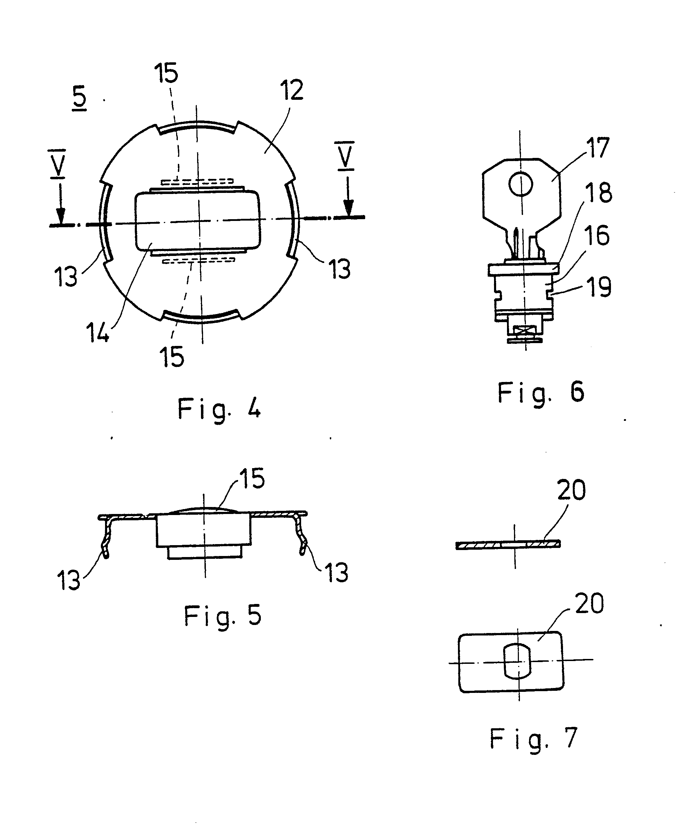

Figuren 4 und 5 zeigen in zwei Ansichten den konstruktiven Aufbau des in die Nabenbohrung von innen einzusetzenden Halteteiles 5, wobei die Fig. 5 eine Schnittdarstellung längs der Linie V-V in Fig. 4 wiedergibt.

Dieses Halteteil 5 besteht im wesentlichen aus einer ebenen Platte 12 mit einem Durchmesser, der genau dem lichten Durchmesser der Nabenöffnung in der Felge entspricht. Um schon bei der Montage des Rades einen guten Sitz dieses Halteteiles zu garantieren, sind federnde Ansätze 13 vorgesehen, die, wie in Fig. 1 gezeigt, die Innenränder 4 der Nabenöffnung umgreifen, und damit die Platte 12 selbst fest gegen diesen Rand drücken und dort halten.

In der Mitte hat die Halteplatte 12 eine im wesentlichen rechteckige Durchtrittsöffnung 14 zum Einführen eines Drehriegels wie später noch im einzelnen anhand der Fig. 6 bis 8 erläutert wird.

Um eine gute Verriegelung zu erreichen, sind auf der Innenseite der Platte 12 rampenförmige Überhöhungen 15 vorgesehen, auf die der Drehriegel sich bei Verdrehen aufschiebt.

Die Fig. 6 zeigt in einer Seitenansicht ein Zylinderschloß, wie es für die Zwecke der Erfindung vorteilhaft eingesetzt werden kann. Das Schloß 16 selbst wird mittels eines Schlüssels betätigt. Der Schloßkörper wird in seiner Gesamtheit in die Bohrung 10 der Abdeckplatte 6 von der Vorderseite her eingesetzt und stützt sich mit seinem Gehäuserand 18 auf der Platte ab. Das Schloß wird durch Einschieben einer — nicht dargestellten — Halteklammer auf der Rückseite der Abdeckplatte in Gehäusenuten 19 festgehalten. Dabei kann die Halteklammer selbst aus einem elastischen federnden Material bestehen, um einen guten Sitz zu garantieren. Es kann aber auch in an sich bekannter Weise durch Aufsetzen von Dichtungs- oder Sprengringen ein guter Sitz des Schlosses in der Halteplatte 6 erreicht werden.

Sobald das Schloß in die Halteplatte eingesetzt ist, wird von der Unterseite ein Drehriegel 20 aufgeschoben und entsprechend arretiert. Der Drehriegel 20 ist in den Figuren 6 und 7 in zwei Ansichten dargestellt. Er entspricht in seinen Abmessungen im wesentlichen der Durchtrittsöffnung 14 in der Halteplatte 12.

Funktion und Zusammenwirken der einzelnen Teile ergibt sich an sich aus der vorstehenden Erläuterung der einzelnen Funktionsteile von selbst.

Zur Sicherung der Radschrauben wird als bei einer Radfelge von innen in die Nabenöffnung das Halteteil 5 eingeführt und hinter dem Rand 4 der Nabenöffnung festgehalten.

Die mit einem Schloß 16 versehene Abdeckplatte 6 ist dann aufgesetzt. Die Abdeckplatte 6 ist gemäß einer vorteilhaften Ausführungsform leicht elastisch gehalten. Zur Montage wird dann die Platte zusammen mit dem Schloß fest gegen das Halteteil 5 gedrückt, wobei der Drehriegel 20 so gestellt ist, daß er durch die Öffnung 14 des Halteteiles 5 hindurchtritt. Durch Versperren des Schlosses kommen dann die freien Enden des Drehriegels hinter die Halteplatte zu liegen und üben auf Schloß und Abdeckplatte einen gewissen Zug aus, durch das Anheben auf die Überhöhungen 15.

Nach Abziehen des Schlüssels 17 ist die Abdeckplatte fest mit einer Vorspannung auf der Radschüssel befestigt.

Durch die elastische Vorspannung der Abdeckplatte 6 wird nicht nur zusammen mit der Dichtung 9 ein einwandfreier Sitz der Abdeckplatte erreicht, sondern im besonderen auch ein Verstellen des Schlosses bei Erschütterungen vermieden und beim Wiederöffnen der Verriegelung garantiert, daß sich die Abdeckplatte so anhebt, daß sie abgenommen werden kann. Umgekehrt garantiert die Vorspannung, daß selbst mit einem spitzen Werkzeug die Abdeckplatte praktisch nicht angehoben oder weggedrückt werden kann.

Die neuartige Verriegelung wurde anhand eines besonders vorteilhaften konstruktiven Ausführungsbeispieles erläutert.

Für den auf dem Gebiet tätigen Fachmann ist ersichtlich, daß die Verbindung zwischen dem in die Nabenöffnung eingesetzten Halteteil und einem in der Abdeckplatte zentrisch anzubringenden Eingriffsteil auf die verschiedenste Weise variiert werden kann. Im besonderen kann hierbei die Zuordnung zwischen Durchtrittsöffnung und Drehriegel 20 in verschiedener Weise beispielsweise auch nach Art eines Schloßbesatzes abgeändert werden. Auch eine Art Schraubverbindung zum Aufbringen der für eine elastische Vorspannung der Abdeckplatte notwendigen Zugkraft kann mit einen ggf. auch mehrere Umdrehungen zulassenden Schloß unmittelbar erreicht werden.

Das Ausführungsbeispiel zeigt auch, daß die weitere Ausgestaltung der Radschüssel, mit Ausnahme des unmittelbaren Bereiches, in welchem sich die Radmuttern befinden, beliebig gestaltbar ist, was umgekehrt bedeutet, daß für die verschiedensten Radschüsselgestaltungen mit zurückgezogenen Aufnahmebereichen für die Radmuttern die Erfindung unmittelbar einsetzbar ist, wobei lediglich die Abdeckplatte sowie das in die Nabenöffnung einzuführende Halteteil entsprechend den Abmessungen angepaßt werden müssen.

### Patentansprüche

1. Radfelge für Kraftfahrzeuge mit Sicherung gegen unbefugtes Lösen der Haltemuttern bestehend aus einer einen Felgenring (2) tragenden Radschüssel (1), die auf einem um die Nabenöffnung (3) angeordneten Kranz Bohrungen (5') für die Radschrauben aufweist, die durch eine über vorzugsweise mittels eines Schlosses (16) arretierbare Verriegelung (Halterung) gehaltene Abdeckplatte (6) gegen unbefugten Zugriff geschützt sind, wobei die Verriegelung (Halterung) aus einem Halteteil (5) und einem zentrisch in der Abdeckplatte (6) angeordneten und von der Außenseite der Abdeckplatte (6) betätigbaren Eingriffsteil (7) besteht, dadurch gekennzeichnet, daß der Halteteil (5) in der Nabenöffnung (3) der Radschüssel (1) verspannt eingebaut ist.

2. Radfelge nach Anspruch 1, dadurch gekennzeichnet, daß das Halteteil (5) aus einer von innen in die Nabenöffnung (3) einführbaren Halteplatte (12) besteht, die mit einer Ausnehmung (14) zum Einführen eines an der Abdeckplatte befestigten Eingriffsteiles (7) versehen ist.

3. Radfelge nach Anspruch 2, dadurch gekennzeichnet, daß die Halteplatte (12) mit die Innenränder (4) der Nabenöffnung umgreifenden Haltefedern (13) versehen ist.

4. Radfelge nach Anspruch 2 oder 3, dadurch gekennzeichnet, daß die Ausnehmung (14) entsprechend einem am Eingriffsteil (7) angeordneten Drehriegel als rechteckige Öffnung ausgebildet ist.

5. Radfelge nach einem der Ansprüche 2 bis 4, dadurch gekennzeichnet, daß die Halteplatte (12) an der Innenseite mit zwei symmetrisch zur Aufnahmeöffnung angeordneten rampenartigen Verstärkungsleisten (15) versehen ist, auf die ein Drehriegel (20) des Eingriffsteiles (7) beim Verschwenken und Arretieren verläuft.

6. Radfelge nach Anspruch 1, dadurch gekennzeichnet, daß als Eingriffsteil (7) in der Mitte der Abdeckplatte (6) ein von der Innenseite der Abdeckplatte eingesetzte und als Eingriffsteil in das Halteteil mit einem Drehriegel versehenes Zylinderschloß gebildet ist, das von der Außenseite mit einem Schlüssel betätigbar ist.

7. Radfelge nach einem der vorhergehenden Ansprüche, dadurch gekennzeichnet, daß die Abdeckplatte (6) aus einem Federmaterial besteht.

8. Radfelge nach Anspruch 1 bis 7, dadurch gekennzeichnet, daß die Auflageperipherie der Abdeckplatte (6) einen Dichtungsring (9) aufweist.

### Claims

1. A wheel rim for motor vehicles with security against unauthorized loosening of the retaining nuts, consisting of a wheel dish (1) which carries a rim ring (2) and which has bores (5') for the wheel screws on a crown arranged around the hub opening (3), said screws being protected against unauthorized access by a cover plate (6) which is retained by a locking mechanism (holder) which can preferably by locked by means of a lock (16) where the locking mechanism (holder) consists of a holding part (5) and an engaging part (7) which is centrally arranged in the cover plate (6) and is operable from the outside of the cover plate (6), characterised in that the holding part (5) is installed in the hub opening (3) of the wheel dish (1) in braced manner.

2. A wheel rim as claimed in Claim 1, characterised in that the holding part (5) consists of a holding plate (12) which can be inserted into the hub opening (3) from the inside and which is provided with an aperture (14) for inserting an engaging part (7) secured to the cover plate.

3. A wheel rim as claimed in Claim 2, characterised in that the holding plate (12) is provided with holding springs (13) which grip round the inner edges (4) of the hub opening.

4. A wheel rim as claimed in Claim 2 or Claim 3, characterised in that the aperture (14) is in the form of a rectangular opening corresponding to a rotating bolt which is arranged on the engaging part (7).

5. A wheel rim as claimed in one of Claims 2 to 4, characterised in that on the inside, the holding plate (12) is provided with two ramp-like reinforcement strips (15) which are symmetrically arranged with respect to the receiving opening and on which a rotating bolt (20) of the engaging part (7) runs during the swivelling and locking operation.

6. A wheel rim as claimed in Claim 1, characterised in that as an engaging part (7), a cylinder lock which is operable by means of a key from the outside, is formed in the centre of the cover plate (6), which cylinder lock is inserted from the inside of the cover plate and is provided with a rotating bolt as an engaging part engaging the holding part.

7. A wheel rim as claimed in one of the preceding Claims, characterised in that the cover plate is made of a resilient material.

8. A wheel rim as claimed in Claim 1 to 7, characterised in that the contact periphery of the cover plate (6) has a sealing ring (9).

### Revendications

1. Jante de roue pour véhicules automobiles avec une sécurité contre le détachement intempestif des écrous de maintien, constituée par voile de roue (1) portant un anneau de jante (2) et qui présente sur une couronne disposée autour de l'ouverture du moyeu (3) des perçages (5') pour les vis de roue qui sont protégées contre un accès non autorisé à l'aide d'une plaque de recouvrement (6) maintenue en place avec un verrouillage (support) blocable au moyen d'une serrure (16), le verrouillage (support) étant constitué par un élément de maintien (5) et par un élément d'engagement (7) disposé en position centrale dans la plaque de recouvrement (6) et susceptible d'être manœuvré du côté extérieur de cette dernière, caractérisée par le fait que l'élément de maintien (5) est monté avec serrage dans l'ouverture de moyeu (3) du voile de roue (1).

2. Jante de roue selon la revendication 1, caractérisée par le fait que l'élément de maintien (5) est constitué par une plaque de support (12) qui est susceptible d'être introduite de l'intérieur dans l'ouverture du moyeu (3), ladite plaque de support étant pourvue d'une ouverture (14) servant à l'introduction d'un élément d'engagement (7) fixé à la plaque de recouvrement.

3. Jante de roue selon la revendication 2, caractérisée par le fait que la plaque de maintien (12) est pourvue de ressorts de maintien (13) s'accrochant sur les bords intérieurs (4) de l'ouverture de moyeu.

4. Jante de roue selon la revendication 2 ou 3, caractérisée par le fait que l'ouverture (14) est réalisée sous la forme d'un rectangle, conformément à un verrou tournant disposé sur l'élément d'engagement (7).

5. Jante de roue selon l'une des revendications 2 à 4, caractérisée par le fait que la plaque de maintien (12) est pourvue sur le côté intérieur des deux réglettes de renforcement (15) en forme de rampes, symétriques par rapport à l'ouverture de réception et sur lesquelles s'étend un verrou tournant (20) de l'élément d'engagement (7), lors du basculement et du blocage.

6. Jante de roue selon la revendication 1, caractérisée par le fait que l'élément d'engagement est constitué par une serrure à pompe insérée au milieu de la plaque de recouvrement (6) à partir du côté intérieur de celle-ci, et dont le verrou tournant constitue l'élément d'engagement dans l'élément de maintien, ladite serrure étant manœuvrable à l'aide d'une clé à partir du côté extérieur.

7. Jante de roue selon l'une des revendications précédentes, caractérisée par le fait que la plaque de recouvrement (6) est faite avec un matériau pour ressorts.

8. Jante de roue selon la revendication 1 à 7, caractérisée par le fait que la périphérie d'appui de la plaque de recouvrement (6) comporte une bague d'étanchéité (9).

0 106 142

Fig. 1

1

6

10

11

Fig. 2

6

10

11

Fig. 3

Fig. 4

Fig. 5

Fig. 6

Fig. 7